# EUROPEAN PATENT APPLICATION

(11) **EP 3 917 162 A1**
(43) Date of publication of application: **01.12.2021**
(21) Application number: 20176862.9
(22) Date of filing: 27.05.2020
(51) Int. Cl.: H04R 5/02, H04N 5/232, H04N 7/14, H04N 7/15, G10L 21/0208, H04R 1/40, H04R 5/027, H04S 3/00

(54) **SYSTEM AND DEVICES FOR AUDIO-VIDEO SPATIAL COMMUNICATION AND EVENT SHARING**

(71) Applicant: Binaurics Audio GmbH, 85778 Haimhausen (DE)
(72) Inventor: WIESE, Detlef, 85778 Haimhausen (DE); KRÜGER, Hauke, 52074 Aachen (DE)
(74) Representative: Eisenführ Speiser

(57) **Abstract**

The present application relates to a system and devices for audio-video spatial communication and event sharing. The system comprises:
- a first audio-video spatial communication device comprising a receiver element having:
- a processing unit for receiving a first audio-video stream and for demultiplexing, decoding and signal processing the first audio-video stream to obtain a first video stream and a first audio stream;
- a panoramic audio renderer to render the first audio stream to playback audio via n loudspeakers, where n ≥ 2, and;
- a panoramic video renderer to render the first video stream to playback video on a panoramic display device.

## Description

### FIELD OF THE INVENTION

The present invention relates to a system and devices for audio-video spatial communication and event sharing.

### BACKGROUND OF THE INVENTION

### 1. Voice-over-IP (VoIP) Based Communication

Voice-over-IP (VoIP) based communication today typically involves hardware components for acoustic (audio) as well as visual (video) cues: In a typical VoIP communication session, a video capturing component is used to take a video of the partner who is located in front of a desktop PC or a smartphone device. At the same time, the integrated microphone captures the audio signal which is present in close proximity to the VoIP device.

Both, video and audio signals are encoded by a video and audio codec prior to the emission to the connected partner in order to reduce the required bitrate during transmission. Then, on the receiving end, the received data is fed into the video and audio decoder to reconstruct the signals emitted by the connected partner. The reconstructed signals are then played back via a video 2D-framebuffer on the screen (video) and via a loudspeaker in hands-free mode or a headphone in headset mode (audio).

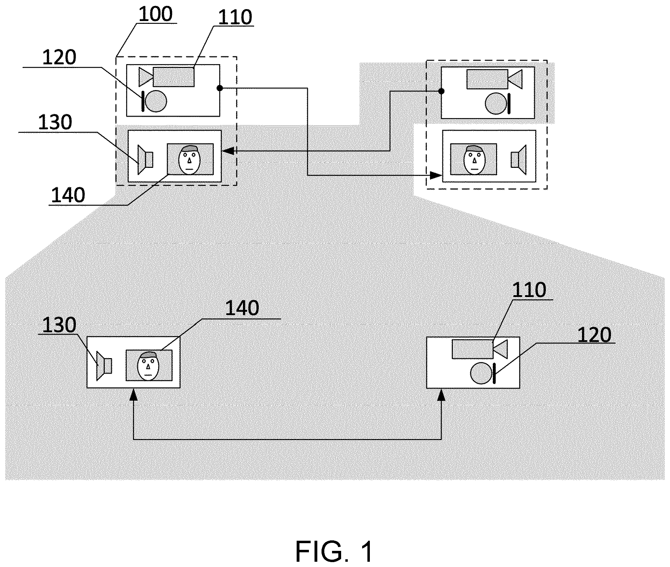

An example for an audio-video communication as it is typically used nowadays is shown in Fig. 1. The sender with microphone and video capture device is shown on the right side whereas the receiver is shown on the left side for the example of a smartphone-to-smartphone communication.

In duplex communications, both ends of the connection act as sender and receiver at the same time. In this case, additional techniques such as an acoustic echo canceller are typically required to prevent that acoustic echoes disturb the communication due to the feedback of the signal emitted by the loudspeaker to the other side.

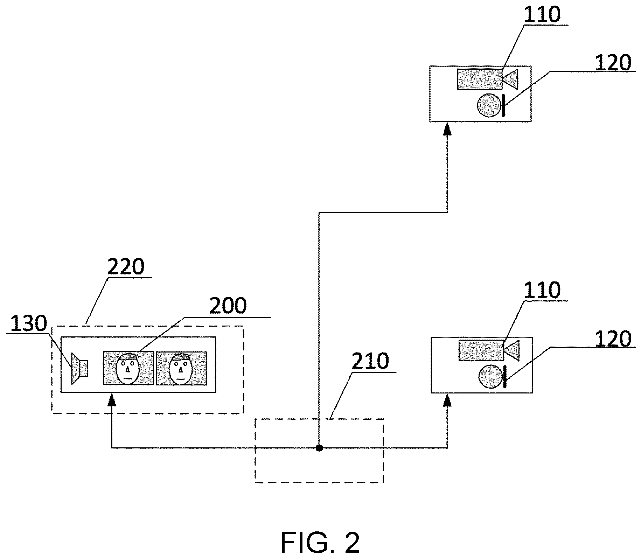

Recently, VoIP solutions are often used for group calls as well. This principle is shown in Fig. 2. In this case, audio signals as well as video signals from both connected partners are mixed in the conference bridge in order to expose the captured faces as well as the emitted speech signals to the receiver side. Even in this case, the communication is typically duplex which requires additional signal compositions and path routings. This, however, shall not be described in detail here.

In all communication applications such as Whatsapp, Skype, Facetime etc., typically only one channel is involved in audio capturing, coding and playback. As a result, the rendering process always acoustically can only re-locate all involved speech signals to a central position, even if the rendering hardware allows multi-channel playback. Also, due to a strong compression in audio source coding, the frequency bandwidth is mostly limited to 0-7 kHz. Both aspects typically lead to a severely degraded overall communication quality.

### 2. Spatial Audio Rendering Techniques for Cinemas and Home Cinema Environments

While typical audio-video communication involves only single channel audio signals and low resolution video (as described above), in cinemas, besides video at highest available resolutions, spatial audio techniques such as Dolby AC3, Dolby Atmos and MPG-H are the basis for a 3D audio experience that carries emotions and allows to let spectators feel like being in the middle of the movie situations. In order to achieve this goal, standard loudspeaker configurations involving a huge number of emitters are required as well as pre-customized audio contents to let audio signal components arrive from all possible directions matching the video content-denoted as spatial audio. The pre-customized audio contents in this case are created by sound engineers in a dedicated post production phase in which access to a whole bunch of source signals is given to find the best spatial composition to optimally support the emotion carried within the shown video contents.

In the case of a home cinema environment, the loudspeakers are expected to be located as specified in the respective standardizations. Sometimes, the placement of the loudspeakers then must be a compromise between optimal placements for audio cues and best fit in the optical fir of the living room ensemble.

### SUMMARY OF THE INVENTION

In the present invention, we propose a novel setup for so-called audio-video spatial communication which we denote as *"audio portation".* In our approach, we want to retain the simplicity of conventional VoIP conferencing solution as described above as state-of-the-art and combine it with the benefits of spatial audio as known from cinemas and home cinema environments.

According to an aspect of the present invention, an audio-video spatial reproduction system as defined in any of claims 1 to 9 is provided. According to another aspect of the present invention, an audio-video spatial communication system as defined in any of claims 10 to 14 is provided.

In particular, the system that is proposed provides one or more or all of the following advantages:
1. supports low delay duplex interactive audio and video communication,
2. allows transportation of spatial audio contents to reconstruct the acoustic scenario on the connected side in high quality rather than a single channel low quality speech signal,
3. allows simple capturing of the spatial audio sound field without that any sound engineer needs to manually tune signal components from dedicated sources,
4. allows to transfer all captured sound fields independently from the rendering environment to yield a receiver-involved-only sound reproduction on the receiver side, and
5. allows the capturing and rendering of the video environment on the receiver side that really lets the spectator/listener get the feeling like being positioned in the middle of the scenario on the sender side (immersive reproduction).

The principle of such a system and variants thereof will be described in the following.

It shall be understood that a preferred embodiment of the present invention can also be any combination of the dependent claims or above embodiments with the respective independent claim.

These and other aspects of the invention will be apparent from and elucidated with reference to the embodiments described hereinafter.

### BRIEF DESCRIPTION OF THE DRAWINGS

These and other aspects of the present invention will be apparent from and elucidated with reference to the embodiments described hereinafter. In the following drawings:
- Fig. 1: shows schematically and exemplarily an audio-video communication as it is typically used nowadays. In the lower part of the figure, a unidirectional audio video connection is shown. On the capturing side, a video camera 110 and a microphone 120 are used to capture video as well as audio signals. The video and audio signals are transferred to the rendering side of the connection where the video signal is rendered to the display 140 and the audio signal is played back via the loudspeaker 140. In the upper part of the figure, a bidirectional communication is shown, which is composed of two unidirectional data connections as shown in the lower part. The two unidirectional data connections act simultaneously to allow full duplex communication. Hence, each duplex communication device 100 consists of the components for capturing of video and audio 110, 120 as well as the components for rendering of audio and video 130, 140.
- Fig. 2: shows schematically and exemplarily a VoIP solution that is used for a group call. In particular, the figure shows a unidirectional audio video connection involving more than two communication partners. There are two capturing devices composed of a camera 110 and a microphone 120 from which the recorded data is transferred to a conference bridge 210. In the conference bridge, the signals from both capturing devices are combined and transferred to the rendering side where video and audio signals are rendered in the rendering endpoint 220. Typically, the videos from both connected partners are combined to form one displayed motion picture 200 by, e.g., showing the two videos in two distinct sub widgets on the display. At the same time, the audio signals are emitted by the loudspeaker 130. In order to present the signals from both connected partners simultaneously, a mix of the signals from both connected partners may be created either in the conference bridge 210 or as part of the rendering endpoint 220. The unidirectional part, as in Fig. 1, is one fundamental building block to realize bidirectional real-time audio-video conferencing.

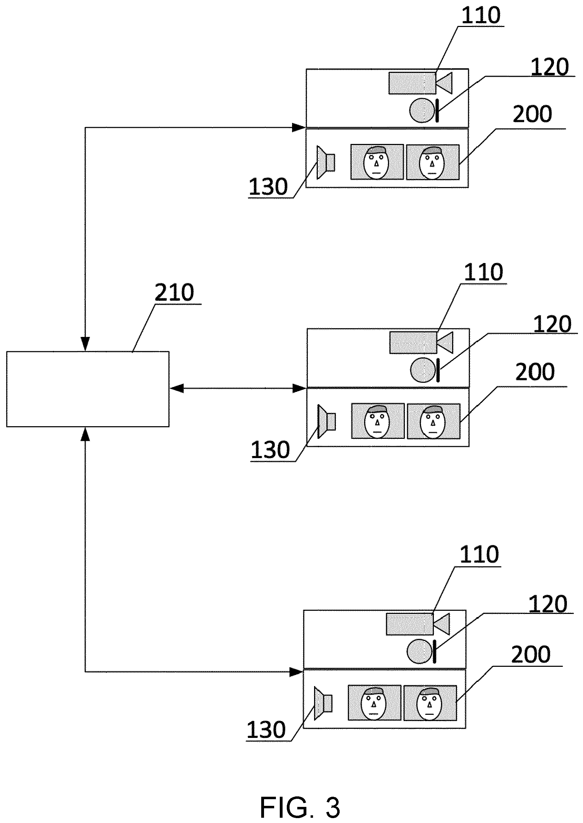

- Fig. 3: shows schematically and exemplarily a duplex audio-video communication link, which is composed of multiple unidirectional connections as described with reference to Fig 2. Each endpoint consists of the components 110 and 120 for capturing video and audio signals (capturing side) and the rendering entities 130 and 200 for the presentation of the audio-video contents from the sides of the other connected partners. All partners are connected to each other via the conference bridge 210. The combination of the signals from multiple partners may be realized as part of the conference bridge or as part of the endpoints.

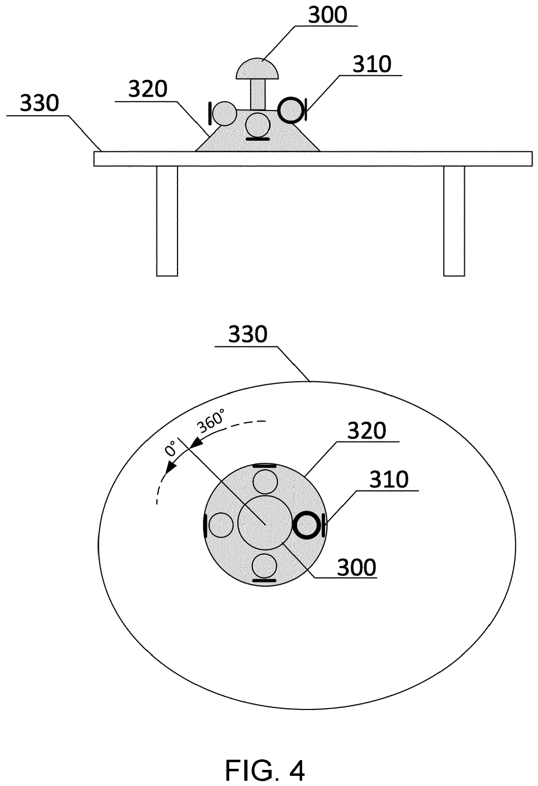

- Fig. 4: shows schematically and exemplarily an audio-video communication device 320 on a table 330 in a side view (upper part) and in a top view (lower part). The communication device consists of a video capturing device 300 which allows to capture 360° panorama views of the environment. The audio capturing involves multiple microphones 310 which allows to capture audio reaching the audio-video communication device from all sides.

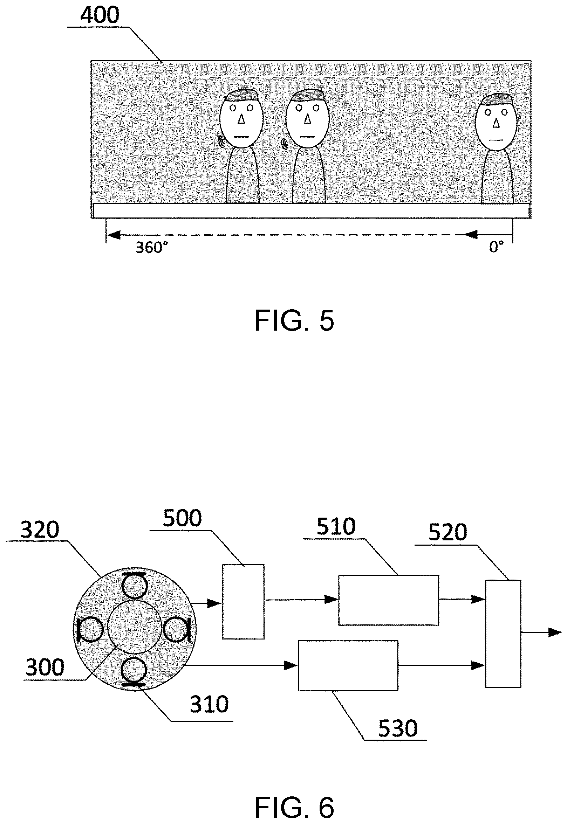

- Fig. 5: shows schematically and exemplarily a rendered video 400 of a 360° panorama view on the rendering side, in which three persons are shown, which surround the communication device 320 on the capturing side.
- Fig. 6: shows schematically and exemplarily the flow of the data in the communication device 320 when operating as a sending entity. The video signal is captured by the panoramic 360° camera 300 and afterwards fed into a video encoder 530. The audio signal is captured by the microphones 310. The signals from all microphones are fed into an unit 500 to transform the captured signals into a form to present the data as a spatial representation. A possible representation might be based on Higher Order Ambisonics (HOA) (in this case, 500 is a HOA encoder). After being transformed into a spatial representation, the audio signals are encoded in the audio encoder 510. Audio and video data are combined in the audio-video multiplexer 520. However, an independent transmission of audio and video without multiplexing is also possible.

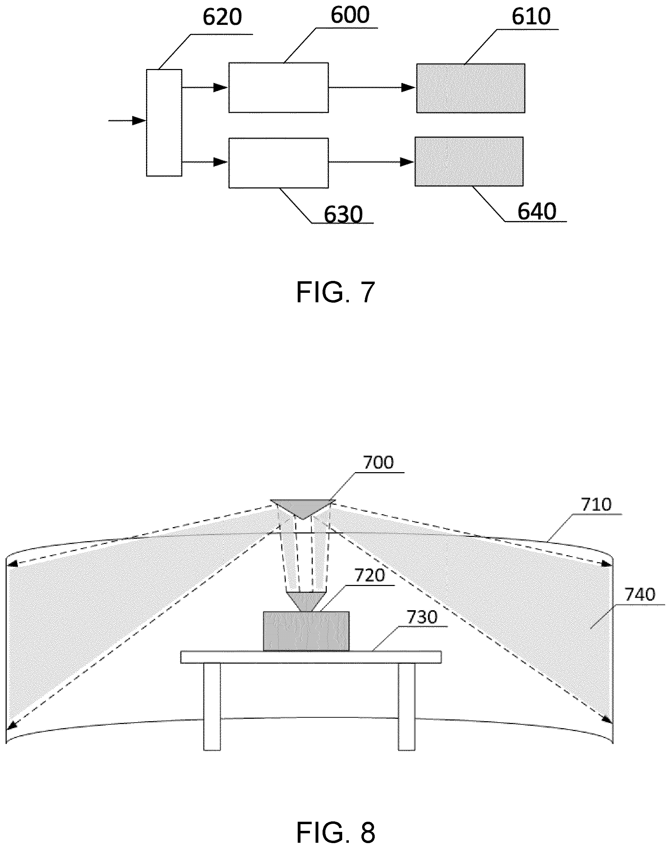

- Fig. 7: shows schematically and exemplarily the flow of the data in the communication device 320 when operating as a receiving entity. The incoming data is demultiplexed in the demultiplexer 620 to form separate audio and video data streams. In the audio decoder 600, the spatial representation of the signal captured on the sending side is produced, which is then fed into the audio renderer 610. In the video decoder 630, the panorama 360° video is produced and fed into the video renderer 640.
- Fig. 8: shows schematically and exemplarily the principle of the panoramic 360° video renderer. The video renderer is part of the communication device placed on the table 730 and consists of a beam emitting device 720 which emits light into the direction of an optical lens. From here, the light is transferred onto a video reflecting device 700 which distributes the light into multiple directions. The scene is surrounded by a canvas 710 on which the light distributed by the video reflecting device 700 is reflected to produce the 360° panorama motion picture 740 as captured on the side of the connected communication partner.

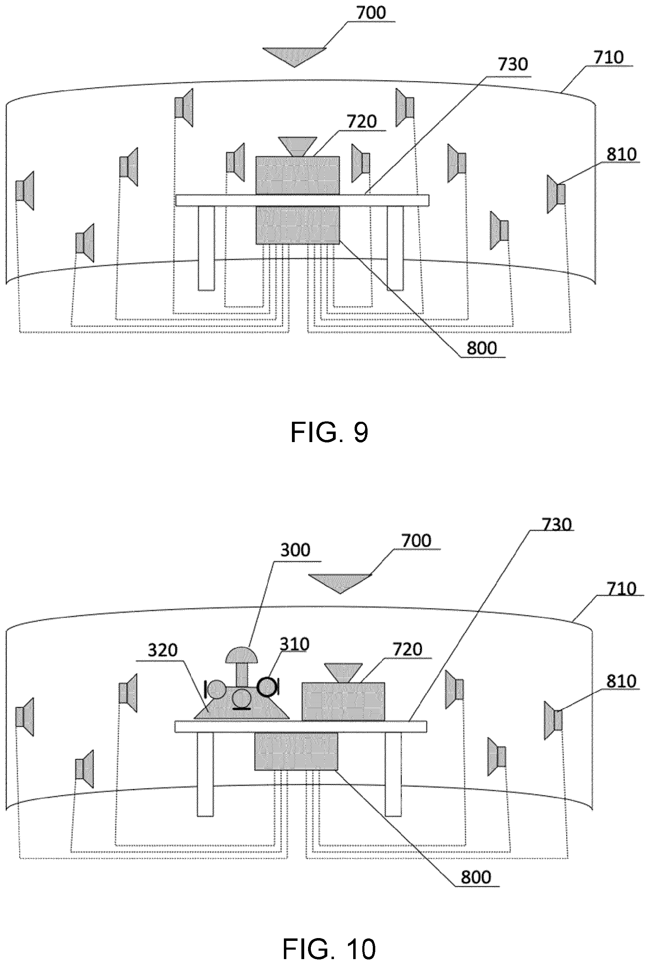

- Fig. 9: shows schematically and exemplarily the audio renderer 720, which is part of the communication device located on the table 730. From the incoming spatial representation (Fig. 7) of the audio as captured on the sender side, the audio renderer 720 computes the signals which are then fed into a multichannel amplifier 800 from which each of the multiple loudspeakers 810 are driven to reproduce the spatial sound field as captured on the side of the communication partner. In order to best reproduce the 360° sound field, the loudspeakers 810 are best distributed uniformly in the reproduction environment. The video reflection entity 700 and the video canvas 710 are shown for the sake of completeness.
- Fig. 10: shows schematically and exemplarily the communication device on the table 730 including capturing as well as rendering functionality as preferably provided for full duplex communication. The communication device comprises the 360° video capturing device 300 and the audio capturing microphones 310 as components of the capturing part 320. On the reproduction side, the communication device comprises the audio and video renderer 720, the reflection entity 700, the canvas 710, the amplifier 800 and the loudspeakers 810, which are distributed uniformly in the reproduction environment.

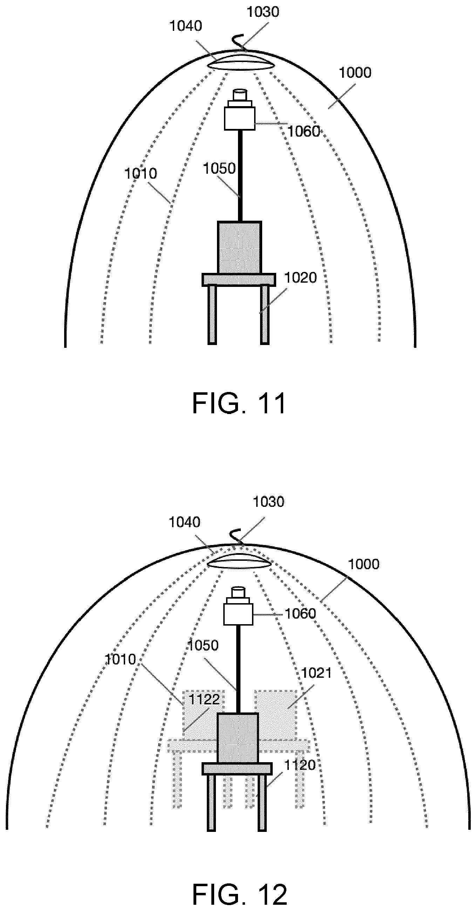

- Fig. 11: shows schematically and exemplarily a dome 1000, which might exist of tent material hanging from the top of a room fixed by a hook 1030. Dotted lines 1010 indicate that it is a three dimensional object. In the center of the dome, there is located, in this example, a chair 1020 for one person. A video projector/beamer 1060 which might be installed either on top of the chair 1020 using a fixed or changeable pole 1050 or hanging on the top fixed by the hook 1030 is projecting the video content to the mirror 1040 which is reflecting the video content to the inner surface of the dome.
- Fig. 12: shows schematically and exemplarily an extended version of the dome 1000 of Fig. 11 with additional room for more people participating in the audio-video portation. In this example, a group of three chairs 1020, 1021, 2022 allows three people to take part of the audio video portation. It depends on the size of the dome 1000 how many people may be placed in the center of the dome 1000.

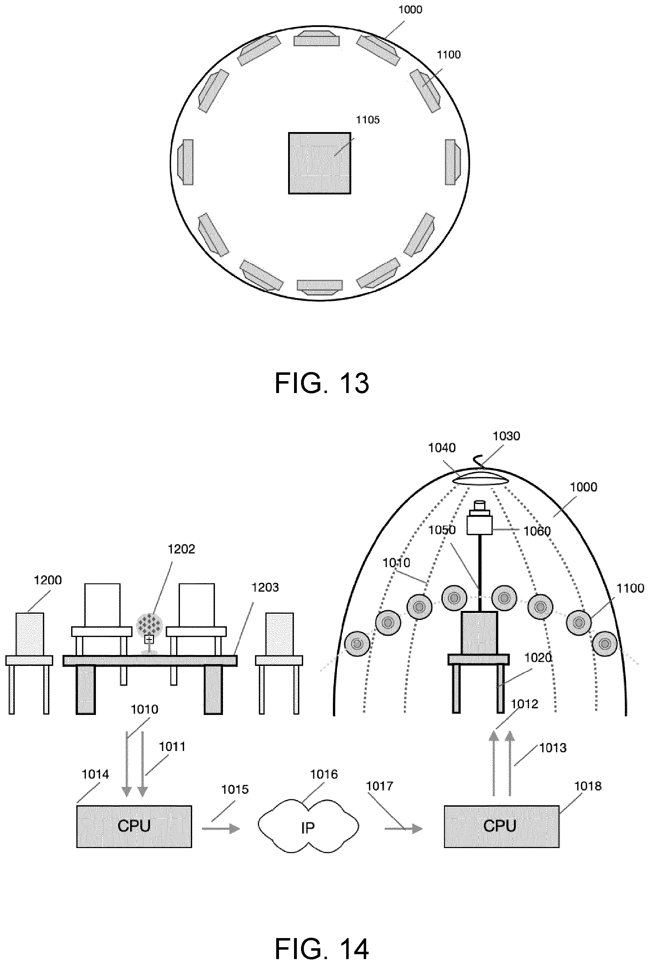

- Fig. 13: shows schematically and exemplarily a top view to the dome 1000 of Fig. 11. In this example, a number of 12 loudspeakers 1100 is grouped in a regular circle while a sub-woofer 1105 for low frequency signals is positioned at the location of the chair, optionally it might be integrated into the chairs architecture.
- Fig. 14: shows schematically and exemplarily a typical communication and/or event sharing situation between a conference consisting of a table and four chairs on side A and the dome 1000 as described in Fig. 11 on side B. Side A includes a device 1202 which is a combination of a multi-array microphone and 360° camera. The audio signals are connected via 1110 and the video signals via 1111 to the CPU 1114. The CPU delivers a stream 1115 signal consisting of audio and video which is transported via the Internet 1116. At Side B the signal 1117 is received by the CPU 1118 which is separating audio and video into 1112 and 1113 delivering it to the speakers 1100 and beamer 1060 of the dome 1000.

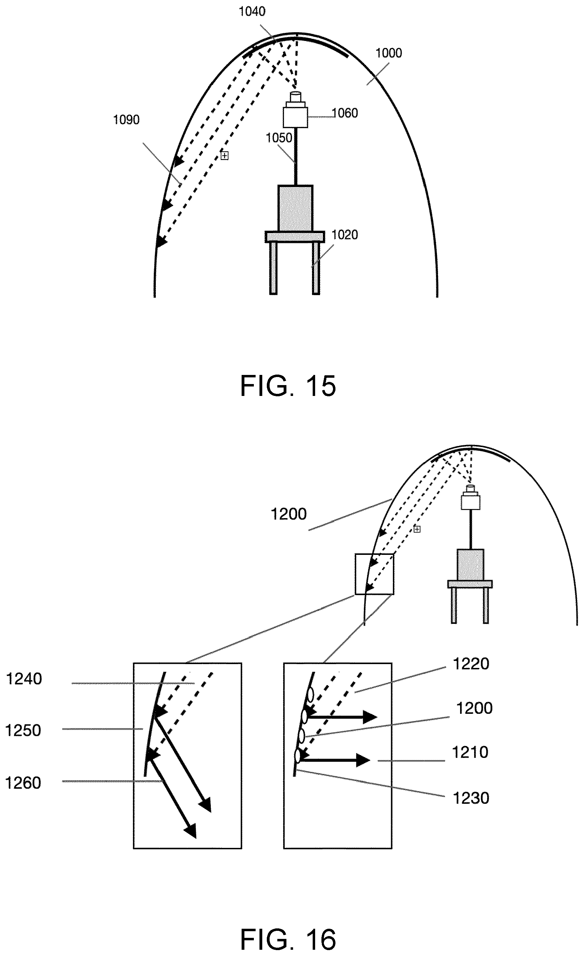

- Fig. 15: shows schematically and exemplarily the dome 1000 with one chair 1020 and a pole 1050 on top of the chair 1020 holding a beamer 1060. The beamer 1060 is beaming the video signal to a reflector 1040 which causes the video signal 1090 to be reflected from the reflector to the dome inner side.
- Fig. 16: shows schematically and exemplarily a part shows a certain part of the dome 1000 of Fig. 14 with two possibilities: a) the video signal 1240 is reflected without any additional introduction of reflecting materials from the inner side 1250 of the dome, and b) the video signal 1220 is reflected from the inner side 1230 of the dome by the introduction of so-called reflecting micro bumps 1200 causing the video signal to be reflected towards the spectator sitting on the chair 1020.

### DETAILED DESCRIPTION OF EMBODIMENTS

### 3. Full Quality Room-to-Room Communication

A system that provides one or of the advantages as described above shall be defined in two steps: at first the sender (capturing) side is shown in Figs. 3 and 4 from two different perspectives. The respective rendering side is shown in Figs. 6 and 7 - again in two perspectives.

As described above with respect to the prior art, a duplex communication system will be created if both ends act as sender and receiver side simultaneously by sending and emitting audio-video contents at the same time. Of course, additional technologies may be realized to e.g. prevent acoustic and visual echoes/feedback. These techniques, however, will not be discussed in this document.

### 3.1 Sender Functionality

In Fig. 3, a scenario is shown, in which three persons are located around a round table. In the middle of the table, an *"audio portation capturing device"* is shown which has an audio part and a video part.

The same situation is given in Fig. 4 in which only the perspective has changed to provide a view from above the table.

Audio and video are captured as follows:
- The audio signals are captured using a microphone enclosure which consists of multiple capsules pointing to different directions. In a preferred case, the microphone may consist of an array with spherical placement in which e.g. n = 32 capsules are distributed uniformly over the surface of a three-dimensional sphere. However, even more simplistic enclosures may be used, e.g. the typical 6+1 enclosure that is nowadays used in various devices used for man-machine-communications based on speech recognition (for example, the Amazon Echo).
- The video signal is captured by the video capturing entity which is part of the device on the table and may be realized, e.g., as a fish eye camera which captures a full panoramic 360° image of all video content that is located around the table.

In Fig. 5, an example is shown what such a 360° panoramic image may be like. This panoramic video starts with person "A" located at e.g. an angle of 0° and then rotates via persons "B" and "C" to finally reach the 360° position.

The captured audio signals from all involved microphones are transformed into a representation to store spatial audio as a *"higher order ambisonics"* (HOA). The HOAs are then fed into a source encoder to be reduced in bit rate and afterwards transmitted to the receiving side at a low to moderate bit rate. The encoding of HOAs to transmit spatial audio representations is a good solution, since it has recently been integrated into the well-known OPUS codec. Alternatively, also object sound coding techniques (e.g., Dolby Atmos or similar) in combination with fixed beamformers can be used.

Parallel to the audio signal, the panoramic 360° video signal is encoded, e.g. by means of the H.265 video codec to allow low bit rate video transmission. Typically, due to the wide nature of the video signal, a high resolution may be required.

Both streams are multiplexed into an audio-video stream that is then transmitted via network link towards the receiver side.

### 3.2 Receiver Functionality

On the receiving side, the encoded bitstream is received and at first de-multiplexed and decoded into a panoramic 360° video and the HOA representation. The decoded signals are then fed into the audio 360° renderer and the video 360° beamer.

The 360° video beamer works as shown in Fig. 7. The panoramic 360° video is emitted by a beamer which is in the central position pointing from the table to the ceiling of the room. At the ceiling, there is a reflector which reflects the video signal towards a canvas which surrounds the video beamer.

If properly constructed, the 360° video beamer displays the 360° panoramic view on the 360° canvas on the receiver side. In the figure, the three persons A-C as captured on the sender side are shown with the contour in dotted lines to demonstrate the functionality.

The audio 360° renderer is based on loudspeakers, which are integrated into the canvas on the receiver side as shown in Fig. 8.

Typically, the loudspeakers can be mounted from the back of the canvas and covered by a permeable surface such that no artefacts are caused in the 360° panoramic video presentation.

In order to create the audio signals to be fed into each of the loudspeakers, different rendering techniques may be applied such as vector-based-amplitude-panning (VBAP) and Allrad rendering as proposed in the literature on higher order signal reconstruction.

### 3.3 Full Duplex Functionality

For a full duplex communication, each communication side comprises sender and receiver functionality. Hence, each device preferably comprises the following functional building blocks:
1. multi-capsule microphone for audio capturing,
2. camera for capturing the 360° panoramic view,
3. signal processing, encoding and multiplexing functionality to allow transmission of encoded data on the sender side,
4. de-multiplexing, decoding and signal processing on the receiver side,
5. video 360° rendering functionality, and
6. audio 360° rendering functionality.

In addition to these functional components described above, feedback cancellation methods are preferably provided:
- An *acoustic echo canceller* is preferably provided to prevent that the signal emitted by the loudspeaker and fed into the microphones is transferred back to other side. In some embodiments, adaptive filters are used to filter out those parts of the recorded signals that have their origin in the signal emitted by the loudspeaker. Techniques for acoustic echo cancellers are available in the literature.
- A *video feedback canceller* is preferably provided to prevent that the video signal emitted by the video 360° panoramic renderer is captured by the camera and transmitted back to the other side. In some embodiments, an adaptive video filter is used to find an estimate of the image emitted by the renderer in the signal captured by the 360° panoramic camera. As it is very likely that distortions and pixel misplacements occur prior to the presentation of the video signal on the canvas, approaches for the video feedback compensation preferably include some type of pixel alignment procedure. So far, techniques for this kind of processing have not been investigated in detail, since the proposed architecture of the audio-video communication system has not been published anywhere before.

### 4. Variants of the Audio-Video Spatial Communication

The audio-video communication system as proposed above is a full feature variant of a group of technologies that provide significant benefits compared to VoIP audio-video communication solutions as currently available in the market. However, not everyone will start with the full feature set when getting in contact with the proposed solution.

In the following, variants of the core technology will be listed that - on the one hand - may be available at lower cost and - on the other hand - will not achieve the quality of the full feature application but nevertheless lead to a significantly higher communication quality than system currently available in the market.

### 4.1 Sender Side - Alternative Methods for Capturing Video

The full feature version of the audio-video communication device preferably comprises a fish-eye camera to capture a 360° panoramic video of the environment. If such a camera is not available, a common camera can be used as follows:
- If all content to be captured is in one semi-sphere, the camera can be setup to capture only the 180° half-panoramic view. This might be the case if all participants are grouped next to each other. If desired, a wide angle may increase the opening of the panorama.
- If the setup is rather fixed, a fixed image can be used instead of a video. In this case, a conventional smartphone may be used to make a 360° panoramic image at the beginning of the session which will be the (fixed) image to be rendered by the 360° video renderer on the receiver side.

### 4.2 Rendering Side - Alternative Methods for Rendering Audio

In the full feature realization, multiple loudspeakers are required. Typically, the number of loudspeakers must be high enough to well cover the full spherical 3D environment.

### 4.2.1 Number of Loudspeakers for Spatial Rendering

If the number of loudspeakers is reduced, sounds coming from positions which are not covered by a loudspeaker may become widened (the perceived acoustical source position becomes spread). Also, if sources come from locations which are not covered by loudspeakers at all, the sound may be perceived to come from a wrong position or from all directions. In tests, we found that 15 loudspeakers is a good setup to achieve the audio in a very natural way.

Principally, the location of the loudspeakers does not necessarily have to follow a predefined scheme. Instead, typically, the given loudspeaker assembly can be measured based on calibration signals and a test microphone. Then, the matching rendering functionality can be derived once and afterwards used for any future playback.

If the number of loudspeakers is reduced, the covered space of possible directions from which sound sources may arrive can be adapted to match the given physical setup in the rendering engine. For example, if sources come from specific elevation angles, these elevated signals may be re-positioned to another position with identical azimuth angle but with no elevation. Another example would be a setup where sound sources have their origin at an azimuth of 180° (arriving *"from the back"*) but there is no loudspeaker to play signals coming from the back. In this case all sources may be *"warped"* to span an azimuth of only a fraction of the overall 360° space.

### 4.2.2 Binaural Rendering for Single Listeners

If only one listener is present or the rendering device is connected to headphones, there is no need to emit audio signals from a large number of loudspeakers. In this case, instead of a spatial sound re-synthesis, a binaural playback engine is used. For this purpose, the signals arriving from the sender side in a HOA representation are transformed into a binaural version. In that binaural version, only left and right ear channels are present. These two signals can be considered as those signals which a person would hear if he/she would be located in the middle of the environment on the sender side. By feeding these signals directly into the ears by using a headphone will simulate the acoustics and sound localities such that for the listeners it feels like being there.

In order to obtain the binaural signals, the HOA representation can be transformed into a binaural representation directly (literature is available). Alternatively, if audio objects and positions are known, so-called head-related-transfer functions (HRTFs) can be used to artificially render the sound sources.

In a static setup, movements of the head are perceived as confusing by the listeners, since the virtual audio composition does not adapt as it would if the listener moved his head in the original situation. As a solution, a head tracker can be added to follow the orientation of the head, which then controls the rendering of the binaural signal from the HOA representation or the objects with source directions.

If no headphone is used, by using so-called Cross-Talk-Cancellation (CTC) techniques, the binaural rendering can also be realized by pre-processing the binaural signals and emission via two loudspeakers. The principle of CTC is well described in the literature.

### 4.3 Rendering Side - Alternative Methods for Rendering Video

In the full-feature version of the proposed audio-video communication device, the 360° panoramic video is rendered to a canvas which is located around the space in which the listeners and viewers are located. It is expected that the canvas is not present in any case. However, by transforming the video signal, the video images may also be rendered to the surface of the room walls. Of course, the overall quality will suffer from the visual properties of the wall and the fact that different parts of the presentation ground (the walls) have different distance to the central reflector in the beamer presentation system. However, linear transforms can be applied to best match the presentation signal to the given characteristics of the room. For this purpose, after installing the 360° video beamer, the system is preferably calibrated to find out about the characteristics of the room in the first step to parameterize the linear transforms in the second step.

Given a single viewer scenario, a smartphone can be used to define a single viewer viewport to the 360° panoramic view. The orientation of the smartphone in relation to the overall 360° panorama can be derived from the sensors available in the smartphone.

If the viewer listens to the audio signal using a headphone, the orientation can be used to control the generation of the binaural audio signals to allow an adaptation of the locations of the sound sources in the spatial audio signal based on the change of orientation of the smart phone.

### 5. Audio-Video Spatial Communication and Conferencing

If multiple connected partners want to join a conference, the proposed audio-video communication technology can be used as follows:

### 5.1 Introduce Phone Calls to Existing Call

If a call between two devices of our audio-video communication device is already running, in the optimal case, sound sources are located everywhere in the 360°-degree space of the panoramic view. If another call starts to join this communication, the sound and video signals can be located everywhere within the panoramic view. An example is depicted in Fig. 12.

In the figure, three persons A-C are already connected once the new caller D joins the call. D, however, only has a conventional VoIP connection or - even worse - uses his telephone to join the existing call. If a video is transmitted, it is rendered at a specific location in the 360° panoramic space (here at the right side). The corresponding sound will be rendered such that the single channel signal is emitted by the 360° audio renderer from the same position at which the video is shown. If no video signal is present, instead a fixed image of the person who calls can be rendered at the location of origin. Naturally, every additional caller can be handled in the same way, popping up at a different location each.

If an administrator has control of the conversation, the location of the incoming callers can be controlled in a user interface. However, in order to increase the intelligibility, it makes sense to locate the incoming caller at a position where no other sound source is present. In that case, the decoding audio-video communication device continuously observes the full 360° panoramic space to determine the optimal free position. In order to avoid confusion, it makes sense to not switch the position too often. A dedicated logic therefore always keeps track of the system to follow an optimal *"home call placement strategy".*

### 5.2 Merging two Full-Feature Calls

If one call is already there and another full feature call starts, the 360° panoramic rendering space is already fully populated. In this case, the 360° space is decomposed into 2 180° subspace for video as well as audio.

Such a switch is exemplified in Fig. 14. In the first part of the figure, in the panorama view only one call is shown with persons A-C. Of course, the voices may arrive at all available positions.

Then, in the second part of the figure, a call to a second connected partner was started. In order to separate the persons in the panorama view, the 360° degree space into 2 halves. In each half, the persons from one location are shifted together to only populate 180° space of the panoramic view. Besides restricting the video to populate only part of the full panoramic space, also the sounds will be modified such the associated position is transformed in the HOA domain to match the video by means of position warping.

Of course, the techniques for incoming single channel connections and full-feature audio-video connections can be combined within one call.

### 6. Other Use-Cases of the Audio-Video Spatial Communication System

So far, the purpose of the proposed audio-video technique was to define a higher quality conferencing system compared to what is available today. In addition, however, the technique can be used as well for non-conference situations in which it is desired to create a realistic and emotionally highly valuable *"audio-and-video portation"* system for example for the following use cases:
- Transmission of audio and video from a soccer game: the audio-video communication device is placed within the audience of a soccer game. A spectator is located in his home environment and uses the audio-video communication device. Due to the spatial audio experiences, all sounds come from the direction as if the spectator would be in the stadium. Due to the rendered video, the spectator may observe people at neighbor positions, in front of him and even the soccer match itself to be displayed on the canvas.

### 7. The Audio-Visua/-Portation-Dome

As described earlier, the presentation of the 360° panoramic video is preferably realized by means of the 360° video beamer. In this section, a possible implementation of such a beamer shall be briefly presented involving the *"Audio-Visual-Portation-Dome"* as shown in Fig. 15.

The dome 1000 comprises one or more chairs 1020 in the center and the side walls of the construction which act as surrounding video image canvas. The 360° video beamer 1060 is located above the chairs 1000 in the center position and consists of the light emitting source of light and a lens or - more general - an optical entity. The light is emitted by the beamer through the optical entity to allow focusing on the canvas of the dome 1000, but at first reaches the reflector 1040 which is located on the ceiling of the dome 1000. This reflector 1040 is not a simple mirror, but instead, it has a curved reflector surface.

The light rays emitted by the beamer 1060 are visualized in Fig. 15 as the dotted lines with arrows. By setting up the lens and the reflector 1040 properly, the video emitted by the beamer 1060 will enlighten the sidewalls of the dome 1000 such that the people seated in the middle position fell like being in the middle of the 360° panoramic video. Of course, the lens must be designed to take account for the different distances of the light rays towards the canvas.

In addition to the video emission and canvas, loudspeakers are positioned in close proximity to the walls of the dome to playback the 360° sound fields as mentioned before. In order to avoid artefacts in the video rendering process, the loudspeakers may be covered with canvas or may be mounted to the dome walls. As a result, considering audio and video, the spectator/listener is really in the middle of the original scene as captured on the sender side!

### 7.1 Refinement of the 360° Beamer Functionality

For the optimal setup of the 360° video beamer 1060, besides allowing the rendering of audio and video, it must be taken into consideration that the people inside the dome 1000 want to experience full immersion. In order to do so, it should be possible for them to move within the middle of the dome as much as possible. However, if the spectators move arms or hands too far to the canvas/side walls of the dome 1000, shadows will become visible on the canvas surface.

### 7.1.1 Equalization of Video Content

In order to operate properly, the video should preferably be preprocessed ("*equalized"*) to have a proper reconstruction of the 360° panoramic images on the side walls of the dome 1000. This can be done easily by means of linear transforms which may for example be run on GPUs (graphical processing units) as typically available in almost all computer and smartphone devices today. This equalization may also require to flip all images head to the tow.

### 7.1.2 Better Reflection Walls for Steep Light Emission

The surface of the canvas in the dome 1000 may be modified such that, e.g., micro-bumps are added which enlarge the diffuse reflection, see Fig. 16. As a result, lesser light is required. It is also an option to add different types of micro-bumps depending on the position on the canvas to focus all light reflections on the canvas surface towards the center of the dome 1000 and, hence, the spectators.

### 8. Further remarks

Other variations to the disclosed embodiments can be understood and effected by those skilled in the art in practicing the claimed invention, from a study of the drawings, the disclosure, and the appended claims.

In the claims, the word "comprising" does not exclude other elements or steps, and the indefinite article "a" or "an" does not exclude a plurality.

A single unit or device may fulfill the functions of several items recited in the claims. The mere fact that certain measures are recited in mutually different dependent claims does not indicate that a combination of these measures cannot be used to advantage.

Any reference signs in the claims should not be construed as limiting the scope.

## Claims

1. An audio-visual spatial reproduction system, comprising:
- a first audio-video spatial communication device comprising a receiver element having:
- a processing unit for receiving a first audio-video stream and for demultiplexing, decoding and signal processing the first audio-video stream to obtain a first video stream and a first audio stream;
- a panoramic audio renderer to render the first audio stream to playback audio via *n* loudspeakers, where *n* ≥ 2, and;
- a panoramic video renderer to render the first video stream to playback video on a panoramic display device.

2. The audio-video spatial reproduction system as defined in any of claims 1 to 4, wherein the panoramic video renderer of the first audio-video spatial communication device is configured to render at least a 180° panorama, preferably at least a 270° panorama, most preferably a 360° panorama.

3. The audio-video spatial reproduction system as defined in claim 1 or 2, wherein panoramic display device of the first audio-video spatial communication device is configured to display at least a 180° panorama, preferably at least a 270° panorama, most preferably a 360° panorama.

4. The audio-video spatial reproduction system as defined in any of claims 1 to 3, wherein the first audio-video stream is either provided by a storage medium or is provided live.

5. The audio-video spatial reproduction system as defined in any of claims 1 to 4, wherein the first audio video stream has been captured by a panoramic camera as at least a 180° panorama, preferably as at least a 270° panorama, most preferably as a 360° panorama, and/or the first audio stream has been captured by a panoramic microphone array of as at least a 180° panorama, preferably as at least a 270° panorama, most preferably as at least a 360° panorama.

6. The audio-video spatial reproduction system as defined in any of claims 1 to 5, wherein the first audio-video stream has been created by a smartphone consisting of one or more cameras and one or more microphones.

7. The audio-video spatial reproduction system as defined in any of claims 1 to 6, wherein the panoramic display device of the first audio-video spatial communication device comprises:
- a video emitting device (720) to emit the video;
- a video reflecting device (700) to distribute the emitted video into multiple directions, and;
- a projection surface (710) on which the video distributed by the video reflecting device (700) is reflected.

8. The audio-video spatial reproduction system as defined in claim 7, wherein the projection surface (710) is shaped in the form of a dome (1000).

9. The audio-video spatial reproduction system as defined in claim 8, wherein the dome (1000) comprises one or more of the following characteristics: (i) it provides enough space for at least one person, at least two persons, at least three persons, at least four persons, at least five persons, at least 10 persons or at least 20 persons to be situated inside the dome (1000); (ii) it is fabricated from a reflecting canvas or includes another reflecting material; (iii) it has a patent folding, (iv) it has at least some of the *n* loudspeakers integrated in its surface; (v) it has at least some cabling for the *n* loudspeakers integrated into its surface; (vi) a part of its circumference is open to enter the dome (1000), and; (vii) its inner surface comprises micro bumps for an improved targeted reflection.

10. An audio-video spatial communication system, comprising:
- the audio-visual spatial reproduction system as defined in any of claims 1 to 9, and;
- an audio-visual spatial production system, comprising:
- a second audio-video spatial communication device comprising a sender element having:
- a panoramic camera to capture at least a part of the video environment at the second audio-video spatial communication device in the first video stream;
- a panoramic microphone array to capture at least a part of the audio environment at the second audio-video spatial communication device in the first audio stream, and;
- a processing unit for signal processing, encoding and multiplexing the first video stream and the first audio stream to obtain the first audio-video stream and for sending the first audio-video stream.

11. The audio-video spatial communication system as defined in claim 10, wherein:
- the first audio-video spatial communication device further comprises a sender element having:
- a panoramic camera to capture at least a part of the video environment at the first audio-video spatial communication device in a second video stream;
- a panoramic microphone array to capture at a least part of the audio environment at the first audio-video spatial communication device in a second audio stream, and;
- a processing unit for signal processing, encoding and multiplexing the second video stream and the second audio stream to obtain a second audio-video stream and for sending the second audio-video stream;
- the second audio-video spatial communication device further comprises a receiver element having:
- a processing unit for receiving the second audio-video stream and for demultiplexing, decoding and signal processing the second audio-video stream to obtain the second video stream and the second audio stream.
- a panoramic audio renderer to render the second audio stream to playback audio via *n* loudspeakers, where *n* ≥ 2, and;
- a panoramic video renderer to render the second video stream to playback video on a panoramic display device.

12. The audio-video spatial communication system as defined in claim 11, wherein:
- a multi-channel acoustic echo canceller is provided to prevent that the signal emitted by the *n* loudspeakers is captured by the panoramic microphone array and transmitted back to other side, and/or;
- a video feedback canceller is provided to prevent that the video signal emitted by the panoramic video renderer is captured by the panoramic camera and transmitted back to the other side.

13. The audio-video spatial communication system as defined in any of claims 10 to 12, wherein:
- the panoramic camera of the first and/or the second audio-video spatial communication device is configured to capture at least a 180° panorama of the video environment, preferably at least a 270° panorama of the video environment, most preferably a 360° panorama of the video environment, and/or
- the panoramic microphone array of the first and/or the second audio-video spatial communication device is configured to capture at least a 180° panorama of the audio environment, preferably at least a 270° panorama of the audio environment, most preferably a 360° panorama of the audio environment.

14. The audio-video spatial communication system as defined in any of claims 10 to 13, wherein the audio and video signals are transmitted or stored with transparent high quality, and/or the audio and video signals are encoded using audio and/or video data compression, and/or the audio and video signals are encoded using low delay audio and/or video data compression, and/or the audio and video signals include spatial side information.
